# EUROPEAN PATENT SPECIFICATION

(11) **EP 0 621 974 B1**
(45) Date of publication and mention of the grant of the patent: **13.08.1997**
(21) Application number: 93902388.3
(22) Date of filing: 15.01.1993
(51) Int. Cl.: G09B 23/28

(54) **SURGICAL AND/OR CLINICAL APPARATUS**
CHIRURGISCHE UND/ODER KLINISCHE VORRICHTUNG.
DISPOSITIF CHIRURGICAL ET/OU CLINIQUE

(30) Priority: 15.01.1992 GB 9200858; 13.08.1992 GB 9217157; 19.10.1992 GB 9221934
(43) Date of publication of application: 02.11.1994
(73) Proprietor: LIMBS & THINGS LIMITED, Horfield Bristol BS7 8QS (GB)
(72) Inventor: COOPER, Carolyn, Margot, Bristol BS8 3HP (GB); SUNDERLAND, James, London W11 2AYY (GB)
(74) Representative: Newstead, Michael John
(86) International application number: GB9300088
(87) International publication number: WO9314483

(56) References cited:
- EP-A- 0 243 132
- GB-A- 2 047 101
- GB-A- 2 243 324
- US-A- 2 689 415
- US-A- 4 481 001
- US-A- 4 789 340

## Description

The present invention relates to a method of making a simulation of body tissue for use in practising surgical and/or clinical techniques.

In the medical field, it is necessary for students, doctors and surgeons to be able to practise surgical and clinical techniques. More particularly, there is the need to practise the making of incisions, the removal of various kinds of complaint (such as cysts, haematomas and melanomas, for example), access to venous structures below the epidermis and the insertion of sutures. As an alternative to providing an actual body or part of an actual body for practising such techniques, there is a need for artificial means whereby they can be practised. Known structures providing simulations of body tissue suffer from the disadvantage that they are not sufficiently analogous, either visually or physically, to actual body tissue.

As prior art, there may be mentioned US-A-4 481 001 which discloses a human skin model for training/demonstration purposes comprising a subcutaneous tissue-simulating layer made of a foamed elastomer, a dermis-simulating layer made of a silicone elastomer that contains reinforcing fibres and an epidermis simulating layer made of rubber latex poured or painted on to the dermis-simulating layer and air-cured; GB-A-2 249 738 which discloses a foamed product impregnated and cured for use in a prosthesis; GB-A-2 243 324 which discloses a method of manufacturing a prosthesis from silicone rubber and a foamed material; GB-A-2 047 101 which disclose a self-sealing injection button for a body implant and having a unitary body of cured silicone; and EP-A-0 243 132 which discloses the production of artificial skin having a cultured epidermal cell layer.

According to the present invention, there is provided a method of making a simulation of body tissue for use in practising surgical and/or clinical techniques, the method comprising:
a) providing a layer comprising a simulated epidermis by moulding foam latex rubber between first and second mould members; allowing the foam latex rubber to gel; heating the foam latex rubber; and allowing it to cool; and
b) applying the foam latex rubber as a relatively thin layer over a member of elastomeric material.

Said relatively thin layer may be formed to include a reinforcement of mesh material, such as woven or knitted material.

The elastomeric material could be latex foam, which could be impregnated with a mixture of a silicone sealant and a diluent.

Said relatively thin layer could be bonded to the member of elastomeric material by a bonding layer.

Alternatively, the member of elastomeric material could comprise a mixture of a silicone sealant and a diluent.

The member of elastomeric material could include a simulation of a vein structure.

The present invention will now be described, by way of example, with reference to the accompanying drawings, in which:
Figures 1 to 5 show stages in the manufacture of a simulated muscle layer;
Figure 6 shows a composite body tissue simulating pad;
Figure 7 illustrates the injection of fluid into the composite pad shown in Figure 6;
Figures 8 illustrates the release of injected fluid from the composite pad shown in Figure 7;
Figure 9 illustrates an alternative injection of fluid into the composite pad shown in Figure 6;
Figure 10 shows such a muscle layer incorporated in a composite pad;
Figure 11 illustrates the injection of fluid into the composite pad shown in Figure 10;
Figure 12 shows a mould for the production of a simulated vein structure;
Figures 13a and 13b show simulated vein structures;
Figure 14 shows a cannula attached to a portion of a simulated vein structure as shown in Figure 13a or 13b;
Figures 15a and 15b show moulds for receiving the simulated vein structures shown in Figures 13a and 13b;
Figures 16 and 17 show stages in the manufacture of a simulated venous layer;
Figures 18a and 18b show a composite pad covered with a simulated epidermis;
Figure 19 shows such a composite pad attached to an arm band;
Figure 20 is a perspective view showing the components of a kit;
Figure 21 shows how a body tissue simulating portion is received by a third member of the kit;
Figures 22 and 23 show how a second member of the kit is attached to the third member;
Figure 24 shows how the third and second members are attached to a first member of a kit; and
Figure 25 shows a complete assembly of the components of the kit attached to a table.

First, an example of a method of producing a simulation of human epidermis will be described.

The simulated epidermis is made by laying first a piece of reinforcement - be it nylon, chiffon or lycra for example - on to a sheet of toughened glass. The reinforcement is a mesh material which may, for example, be woven or knitted. Then a quantity (dependent on the required thickness) of liquid natural foam latex is poured on to the reinforcement and a second piece of glass placed over the whole. Pressure is applied evenly between the glass sheets by means of a clamp until the rubber has formed to a suitable thickness (approximately 0.5-2 mm). Then the rubber is allowed to gel and after gelation the top layer of glass is taken off and the lower, together with the reinforced foam, is placed in a low temperature oven and baked at 100°C for one hour. After it has cooled, the sheet of reinforced foam is peeled off the glass, is then washed, dried and powdered and is ready for use.

To produce a shaped portion of simulated human epidermis, members of a mould may be substituted for the glass sheets. Reinforced liquid foam latex may be applied to the inside of one member of the mould and then squeezed to the correct thickness with the second member of the mould. The foam may then be processed as described above.

If desired, and for some uses, the above-mentioned reinforcement may be omitted from the epidermis, the latter consisting just of the natural foam latex processed as described above.

Various uses of such simulated epidermis are in apparatus for practising surgical and/or clinical techniques (see below) and in many forms of medical trainers, model and mannequin applications.

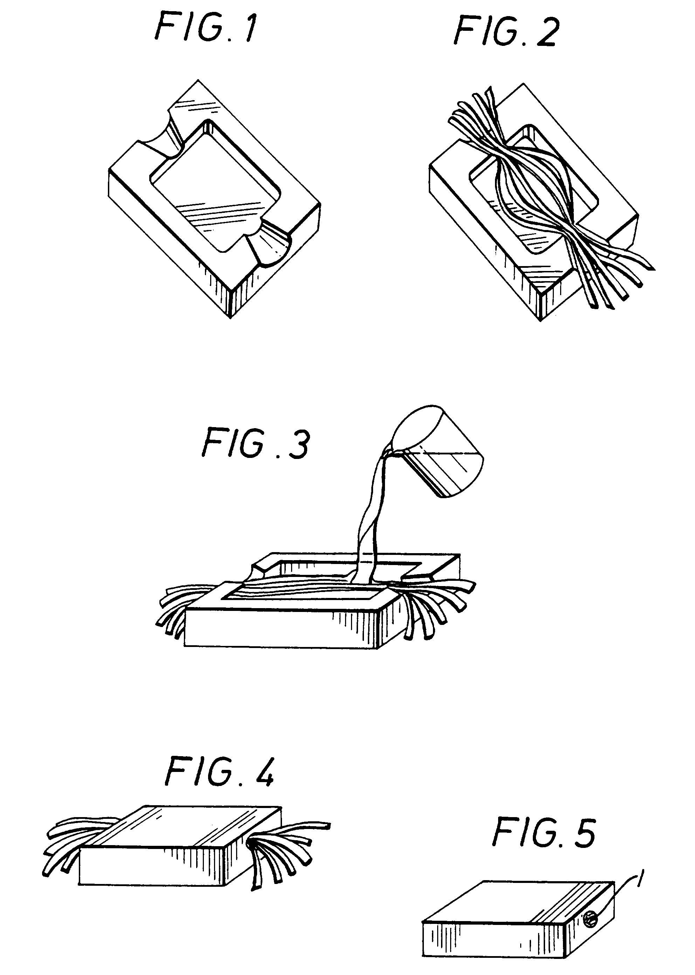

Such simulated epidermis may also be used in the construction of a simulated muscle portion. This may be moulded in any suitable elastomeric material such as condensation cured silicone (including 10% silicone oil) and filled with pieces of simulated epidermis made as described above, cut up into strands and threaded into a muscle-like shape. More particularly, such strands may be laid into a plaster mould (as shown in Figure 1) in the manner shown in Figure 2, the elastomeric material being poured into the mould as shown in Figure 3 and then allowed to set. The resulting shape from the mould is as shown in Figure 4 which is then trimmed to have the shape shown in Figure 5, where reference numeral 1 denotes the simulated muscle. Such a simulated muscle layer may be used in a pad for practising intramuscular injections (see below).

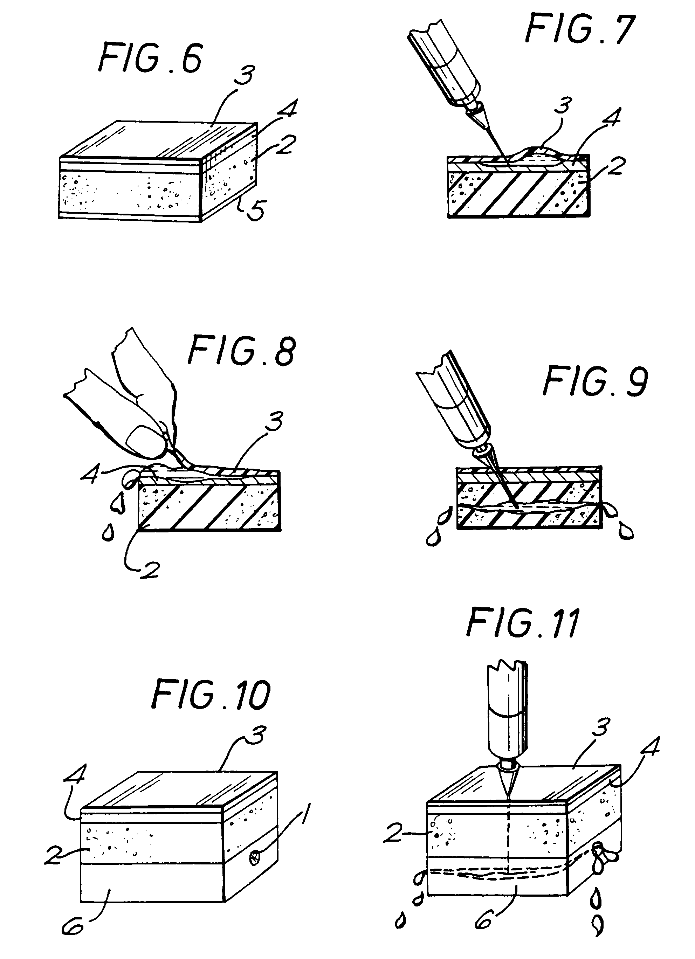

A composite pad for practising surgical and/or clinical techniques will now be described. Figure 6 shows such a pad having a layer 2 simulating a subcutaneous layer, a layer 3 simulating epidermis and a bonding layer 4. The layer 2 comprises a dense latex foam; the bonding layer 4 comprises a mixture of silicone oil and silicone sealant; and the simulated epidermis 3 comprises a fine sheet of latex foam made as described above. A backing sheet 5 may be provided for support. The upper surface of the pad may suitably be about 12cm by 8cm.

One way to produce such a composite pad is as follows. A plain natural latex foam pad about 10mm thick is soaked in a mixture of a silicone sealant and a diluent (suitably silicone oil), the pad is squeezed to remove any excess of this mixture and is hung to dry. The pad is then bonded, using the same or a similar mixture of silicone sealant and diluent, to a fine sheet of latex foam (which is a simulated epidermis as described above). Within the bond layer there may be laid, if desirable for the particular use of the composite pad, a reinforcement. This could be a mesh material of, for example, nylon, chiffon or lycra, which could be woven or knitted. The resultant pad may, if necessary, be mounted with nylon clips on to a 3mm thick backing sheet of plastics support material such as a closed cell, cross-linked expanded polyethylene foam (for example "Plastazote" made by BXL Plastics Limited). If the composite pad is to be used for practising suturing, it is preferable that the simulated epidermis be one in which such mesh reinforcement as described above is included.

The mixture of silicone sealant and diluent contains sufficient diluent to keep the soaked pad and the bond layer in a very soft state. The mixture preferably comprises 2 parts silicone oil (or other diluent) to 1 part silicone sealant. The silicone sealant may be one-part acetoxy-silicone sealant (for example Dow Corning 781 sealant) or okime sealant (for example Dow Corning Q3-7099). The silicone oil may be either a non-reactive diluent, or a reactive diluent (as present in Cosmosil silicone).

In an alternative method, the natural foam latex pad is taken, then such a bonding layer is applied to it and then the simulated epidermis is applied, and thereafter the whole, composite pad is soaked in a diluent, e.g. a silicone oil.

A further composite structure (for example representing a human limb or part of such a limb) may be made which incorporates a portion of shaped simulated epidermis made as described above. The shaped simulated epidermis is laid up on to a shaped piece of foam rubber, to which it is glued with a mixture of sealant and diluent as described above. Alternatively, the shaped epidermis can be left in the mould in which it was formed, and when the second mould member has been removed the epidermis is then covered with a bonding layer and latex foam or is covered with an appropriate substitute such as an elastomeric poly-urethane or silicone gel and a replacement second mould member put in place to close the mould. The mould's contents are allowed to cure or are baked.

Methods of practising surgical and/or clinical techniques using the composite pad, together with adaptations of the pad to suit those techniques, will now be described.

Suturing can be practised in the upper layers of the composite pad.

Subcutaneous injections can be practised by making injections into the space between the simulated epidermis 3 and the layer 4. The injected fluid will bulge up under the simulated epidermis (see Figure 7) and may then be released by carefully peeling back the simulated epidermis (see Figure 8) which can then reseal itself on to the layer 4.

Intradermal injections can be practised by injecting into the layer 2, the injected fluid draining itself - see Figure 9.

Underneath layers 2 and 3 and 4 a simulated muscle layer formed as described above can be clipped loosely to form a pad as shown in Figure 10 in which reference numeral 6 denotes the muscle layer. The muscle layer can bond itself to the layer 2 by the inherent tackiness of the layer 2.

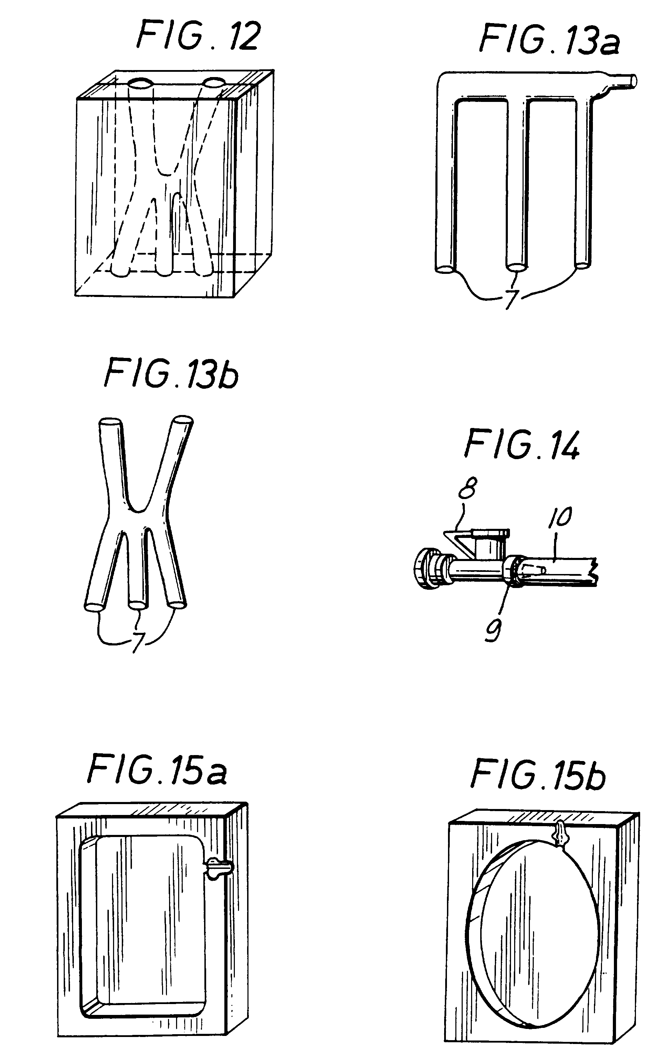

Intramuscular injections can then be practised by injecting into the simulated muscle 1. Following this, the injected fluid drains out to some extent at the sides of the simulated muscle layer (see Figure 11). The muscle layer can then be detached, squeezed out and reattached to the layer 2.

There will now be described a composite pad for practising cannulation and cutdown techniques, having a removable simulated epidermis layer and a venous layer containing simulated veins formed of rubber and charged with fake blood. Such a pad comprises a venous layer having at least one tube of natural latex rubber or silicone (simulating veins) set into a pad of natural latex foam prior to the baking process or into a pad comprising such a mixture as described above of a silicone sealant and a diluent. The tube contains artificial blood which is under pressure similar to that in the body so that when the needle of a syringe is passed into the tube liquid will rise in the syringe. To form the simulated veins a thin latex solution is poured into a plaster mould in two halves (as shown in Figure 12). The resulting simulated veins are then trimmed to size. Two vein patterns may be made: that shown in Figure 13a, for straight veins, and that shown in Figure 13b (as would be produced by the mould shown in Figure 12) for antecubital fossae. An alternative is to make a former of the configuration of the vein structure and dip it into liquid latex rubber to produce the simulated veins. Initially, the simulated veins have open ends. Ends to be sealed (indicated by reference numeral 7 in Figures 13a and 13b) are capped with Dow Corning 781 sealant or rubber glue or any other suitable sealant, which is then allowed to set. The whole vein structure is then dipped in coloured latex solution several times. Into the or one of the open vein ends, a cannula is glued and the simulated vein structure is thereby charged to the required pressure with fake blood (as used in the film industry for example) - see Figure 14 in which reference numeral 8 denotes a cannula glued at 9 into the open end of a simulated vein 10.

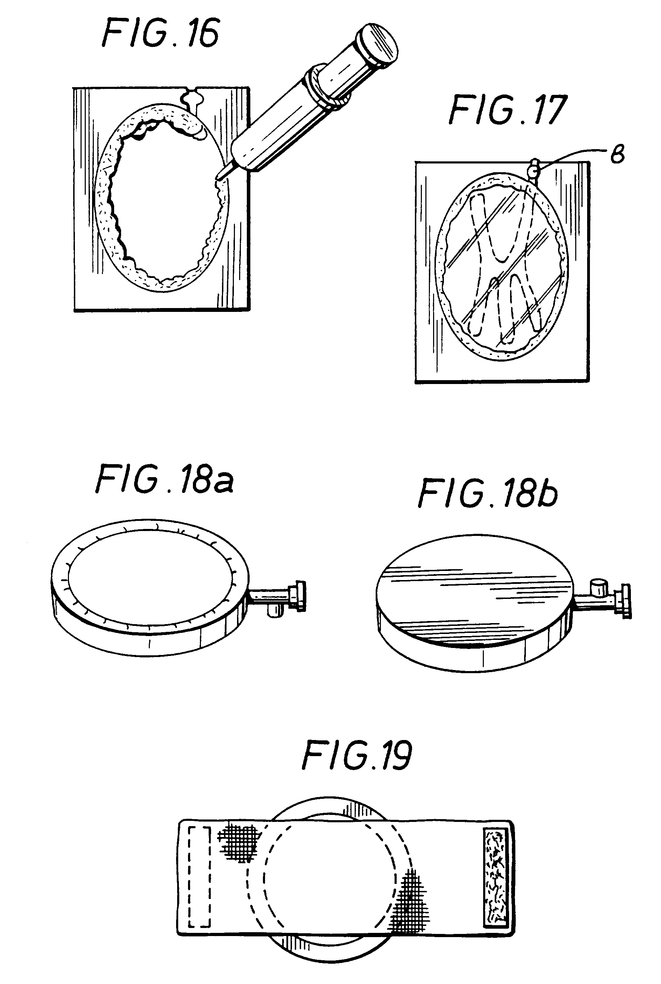

To form the venous layer, a plaster mould is provided for receiving the vein structure - see Figure 15a for a vein pattern as shown in Figure 13a and Figure 15b for a vein pattern as shown in Figure 13b. The inside of the mould having been sanded and shellaced, the mould is sprayed with silicone release agent. Then, silicone sealant (such as Dow Corning 781 sealant) is injected round the edge and on the base of the mould (see Figure 16), neatened off and left to set for 30 minutes. As shown in Figure 17, the vein structure is then laid in the mould and the mould filled with the mixture of silicone sealant and diluent described above, together with a suitable colouring agent (see Figure 17). The mixture is allowed to set for 24 hours. The "upper" face of the resultant pad rests on the bottom of the mould so it is smooth. The vein structure lies at the top of the mould, producing a pad which simulates deeply-set veins. A second version can be laid up so that the veins are more superficial in the pad. The vein structure is removable and can be replaced when extensively punctured.

A base for the cannulation pad is cut from a 2mm sheet of styrene and glued on to the bottom of the venous layer. A cover for the pad is cut from simulated epidermis (made according to any example as described above), the cover being edged with bias binding and threaded with elastic so that it can be placed over the pad as a removable cover - see Figures 18a and 18b which show the bottom and the top respectively of a cannulation pad covered with an epidermis cover.

An elastic arm band may then be glued on to the styrene, which armband has at one end hooks and at the other end loops (dn the opposite side) to provide a "touch and close" (or "hook and loop") fastener (see Figure 19) whereby the armband may be fastened to an arm of a user.

In an alternative structure, the vein structure terminates in a bubble-like structure instead of a cannula, whereby pressure in the vein structure can be increased via a simple hand pump operating on the bubble-like structure.

Pads simulating a variety of conditions which are presented for minor surgery to doctors' clinics or hospital departments, for example, to allow techniques for the treatment or diagnosis of those conditions to be practised will now be described.

### A pad in which there is a simulated sebaceous cyst

To produce such a pad, a silicone rubber bubble is provided filled with a malleable waxy material such as margarine. It is made by shaping the waxy material into a ball and suspending it on a pin. The ball, being suspended by the pin, is dipped into a catalysed silicone composition which is then allowed to cure with the waxy inclusion inside it, forming the bubble. Then the bubble is set into a natural latex foam pad which has been soaked in the mixture of silicone sealant and diluent described above, and bonded to a fine sheet of simulated epidermis as in the composite pad described above.

### A pad in which a perianal haematoma is simulated

To produce such a pad, part of a condom is filled with artificial blood (as used in the film industry for example) and is set into a pad of natural latex foam as part of a composite pad.

### A pad in which a lipoma is simulated

To produce such a pad, condensation cured silicone rubber and silicone oil are dribbled into a bowl of water, thereby making globules which resemble fat. These are mixed with the mixture of a silicone sealant and diluent described above, together with colouring, and shaped to form small balls. Each of these, as a simulated lipoma, is let into the "fat" layer of a composite suture pad. Alternatively, to produce such a lipoma-simulating pad a ball of silicone rubber, gelatine or vinyl PVC may be set in a natural latex foam pad.

### A pad in which a dirty wound is simulated

To produce such a pad, a simple foam pad or a foam pad similar to the composite pad described above is torn and made to look like a wound using a selection of substances or is moulded and cosmetically coloured so as to look convincing.

### A pad in which a melanoma is simulated

To produce such a pad, a natural latex foam pad is made in a mould which leaves a hole in the surface of the pad, into which is placed a light brown piece of silicone rubber, gelatine or vinyl PVC which fills the hole and is either slightly raised or flat.

### A pad in which a lesion for curettage is simulated

Shapes representing different types of skin conditions suitable for curettage are made of an organic material and each is either let into a pad of gelatine by locally melting the gelatine around the "lesion", or glued with a self-levelling silicone sealant into a structure like the base of the cannulation pad described above.

### A pad in which a wart for cryotherapy is simulated

A simulated wart comprising a mixture of an organic alginate and gelatine is let into a gelatine pad so that when liquid nitrogen is applied the lesion and surrounding area turn white.

### A pad in which a skin tag is simulated

Similar material as in the preceding paragraph is turned into a "tag" shape and is reinforced within with thread and let into a pad composed of gelatine with a crosslinking agent.

Pads in which a ganglion or a seborrhoeic wart are simulated may also be produced.

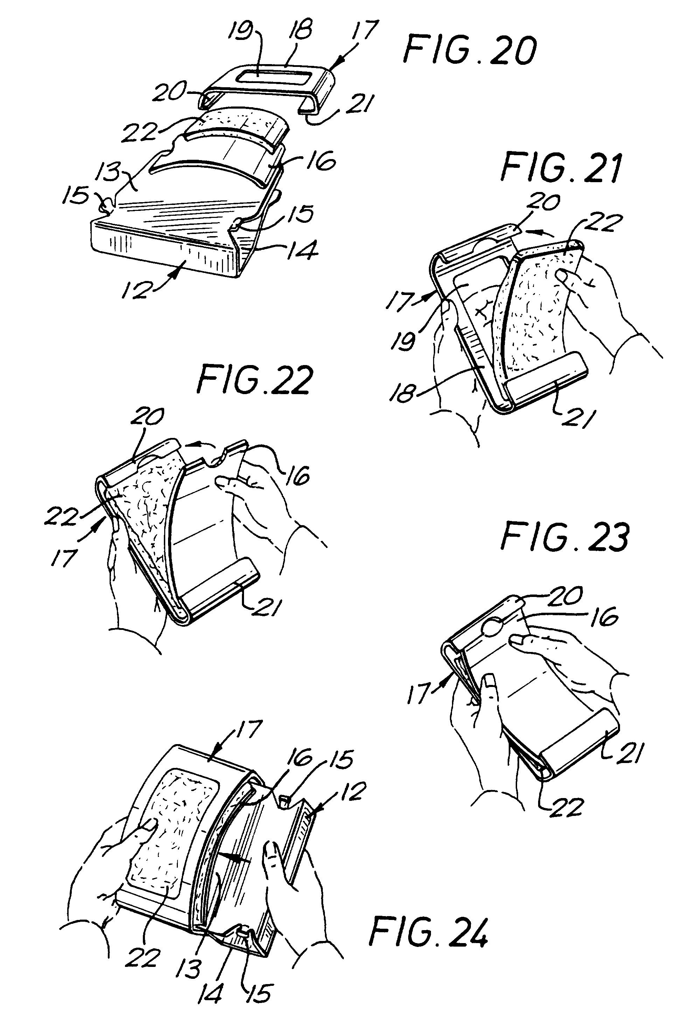

A kit for providing a means of practising surgical techniques will now be described. Referring to Figure 20, a first member 12 of the kit comprises a generally flat portion 13 and, underlying that, a flexible clip portion 14. Reference numeral 15 designates lugs, one on each side of the member 12. A second member 16 is in the form of a curved sheet. A third member 17 comprises a first, generally flat portion 18 having an opening 19 and first and second flange portions 20 and 21 depending from the first portion 18. Reference numeral 22 denotes a pad of latex foam providing a skin and underlying flesh simulating portion. This may suitably be a composite pad as described above.

Members 12, 16 and 17 are each made from "Foamex", which is a uniform closed cell structure, lightly expanded rigid thermoplastic (in particular polyvinylchloride (PVC)) material in sheet form, as manufactured by AIREX A.G. of CH 5643, Sins, Switzerland. Each of members 12, 16 and 17 is made by die cutting a sheet of "Foamex", heating it and forming it around an appropriate plaster mould. Then the material sets and can be removed from the mould.

The components of the kit, to provide an assembly for use in practising surgical techniques, are assembled as follows.

Referring to Figure 21, one end of the pad 22 of latex foam is inserted by hand under the flange portion 21 and the other end is then inserted by hand under the flange portion 20. Thereafter, one end of the member 16 is inserted by hand under the flange portion 21 and the other end is inserted by hand under the flange portion 20 so that the member 16 is attached to the member 17 with the pad 11 received between them - see Figures 22 and 23. By virtue of the curvature of member 16, the pad 22 is held under tension to more realistically simulate skin with underlying flesh.

Then, the generally flat portion 13 of the member 12 is slid by hand between the member 16 and the flange portions 20 and 21 so that the members 16 and 17 with the pad 22 between them are attached to the member 12 by the generally flat portion 13 of member 12 being received by the flange portions 20 and 21 - see Figure 24.

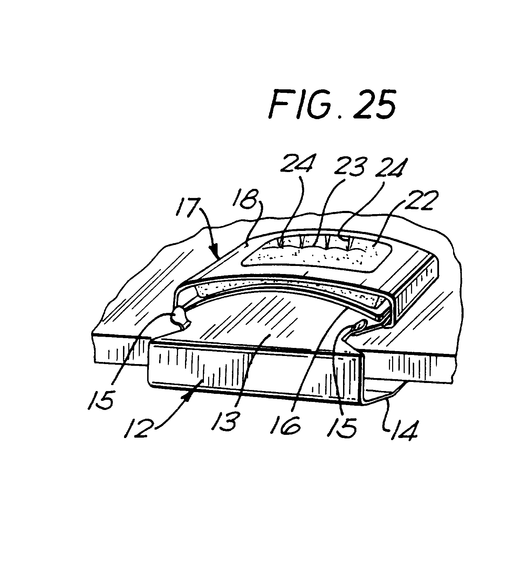

The thus assembled components of the kit now provide an assembly for use in practising surgical techniques. The assembly may be attached to, for example, the edge of a table or workbench via the flexible clip portion 14 - see Figure 25. A surface of the pad 22 is revealed through the opening 19 in the member 18 whereby surgical techniques may be practised. In particular, suturing may be practised. In Figure 25, reference numeral 23 denotes an incision which has been made in the pad 22, reference numeral 24 denoting sutures which have been inserted after the incision 23 was made.

An artificial blood vessel may be looped between the lugs 15 to allow the tying of a blood vessel or anastomosis may be practised.

The components of the kit described above may be provided in a strong box made of polypropylene, together with a series of latex foam pads 22 of the types described above. These may be packed in individual sealed bags.

## Claims

1. A method of making a simulation of body tissue for use in practising surgical and/or clinical techniques, the method comprising:
a) providing a layer (3) comprising a simulated epidermis by moulding foam latex rubber between first and second mould members; allowing the foam latex rubber to gel; heating the foam latex rubber; and allowing it to cool; and
b) applying the foam latex rubber as a relatively thin layer over a member (2) of elastomeric material.

2. A method as claimed in claim 1, wherein said relatively thin layer (3) is formed to include a reinforcement of mesh material.

3. A method as claimed in claim 2, wherein the mesh material comprises woven or knitted material.

4. A method as claimed in any preceding claim, wherein the member (2) of elastomeric material is latex foam.

5. A method as claimed in any preceding claim, wherein said relatively thin layer (3) is bonded by a bonding layer (4) to the member (2) of elastomeric material.

6. A method as claimed in claims 4 and 5, wherein said relatively thin layer (3) is bonded to the member (2) of elastomeric material by a bonding layer (4) comprising a mixture of a silicone sealant and a diluent.

7. A method as claimed in claim 4 or either of claims 5 and 6 as dependent on claim 4, wherein the member (2) of latex foam is impregnated with a mixture of a silicone sealant and a diluent.

8. A method as claimed in any of claims 1 to 3, wherein the member of elastomeric material comprises a mixture of a silicone sealant and a diluent.

9. A method as claimed in any preceding claim, wherein the member of elastomeric material includes a simulation of a vein structure.

## Patentansprüche

1. Verfahren zur Herstellung einer Körpergewebenachahmung zur Verwendung beim Üben von Operations- und/oder klinischen Techniken, wobei das Verfahren umfaßt:
a) Bereitstellen einer Schicht (3), die eine nachgeahmte Epidermis umfaßt, durch Formen eines Latexschaumgummis zwischen ersten und zweiten Formelementen; Erstarrenlassen des Latexschaumgummis; Erwärmen des Latexschaumgummis und Abkühlenlassen desselben; und
b) Aufbringen des Latexschaumgummis als relativ dünne Schicht über ein Element (2) aus Elastomermaterial.

2. Verfahren nach Anspruch 1, bei dem die relativ dünne Schicht (3) so ausgebildet wird, daß sie eine Verstärkung aus Maschenmaterial beinhaltet.

3. Verfahren nach Anspruch 2, bei dem das Maschenmaterial gewebtes oder gestricktes Material umfaßt.

4. Verfahren nach einem der vorhergehenden Ansprüche, bei dem das Element (2) aus Elastomermaterial Latexschaumstoff ist.

5. Verfahren nach einem der vorhergehenden Ansprüche, bei dem die relativ dünne Schicht (3) durch eine Verbindungsschicht (4) mit dem Element (2) aus Elastomermaterial verbunden wird.

6. Verfahren nach Anspruch 4 und 5, bei dem die relativ dünne Schicht (3) mit dem Element (2) aus Elastomermaterial durch eine Verbindungsschicht (4) verbunden wird, die eine Mischung aus einem Silicon-Versiegelungsmittel und einem Verdünnungsmittel umfaßt.

7. Verfahren nach Anspruch 4 oder einem der Ansprüche 5 und 6, wenn er von Anspruch 4 abhängt, bei dem das Element (2) aus Latexschaumstoff mit einer Mischung aus einem Silicon-Versiegelungsmittel und einem Verdünnungsmittel imprägniert wird.

8. Verfahren nach einem der Ansprüche 1 bis 3, bei dem das Element aus Elastomermaterial eine Mischung aus einem Silicon-Versiegelungsmittel und einem Verdünnungsmittel umfaßt.

9. Verfahren nach einem der vorhergehenden Ansprüche, bei dem das Element aus Elastomermaterial eine Nachahmung einer Venenstruktur umfaßt.

## Revendications

1. Méthode permettant de simuler un tissu corporel, utilisable dans des techniques chirurgicales et/ou cliniques, comprenant les étapes consistant à
a) former une couche (3) comprenant un épiderme simulé en moulant une mousse de caoutchouc latex entre des première et deuxième parties d'un moule ; laisser la mousse de caoutchouc latex gélifier ; chauffer la mousse de caoutchouc latex ; et la laisser refroidir ; et
b) appliquer la mousse de caoutchouc latex comme couche relativement mince sur une pièce (2) d'un matériau élastomère.

2. Méthode selon la revendication 1, dans laquelle la couche relativement fine (3) est formée de manière à inclure un renforcement d'un matériau en mailles.

3. Méthode selon la revendication 2, dans laquelle le matériau en mailles comprend un matériau tissé ou tricoté.

4. Méthode selon l'une des revendications précédentes, dans laquelle la pièce (2) de matériau élastomère est une mousse de latex.

5. Méthode selon l'une des revendications précédentes, dans laquelle la couche relativement fine (3) est liée par une couche de liaison (4) à la pièce (2) de matériau élastomère.

6. Méthode selon la revendication 4 ou 5, dans laquelle la couche relativement fine (3) est liée à la pièce (2) de matériau élastomère par une couche de liaison (4) comprenant un mélange d'une colle silicone ou d'un diluent.

7. Méthode selon la revendication 4 ou l'une des revendications 5 et 6 en dépendance de la revendication 4, dans laquelle l'élément (2) de mousse de latex est imprégné d'un mélange d'une colle silicone et d'un diluent.

8. Méthode selon l'une des revendications 1 à 3, dans laquelle l'élément du matériau élastomère comprend un mélange d'une colle silicone et d'un diluent.

9. Méthode selon l'une des revendications précédentes, dans laquelle la pièce en matériau élastomère comprend une simulation d'une structure veineuse.
